# FASCICULE DE BREVET EUROPEEN

(11) **EP 3 338 942 B1**
(45) Date de publication et mention de la délivrance du brevet: **01.09.2021**
(21) Numéro de dépôt: 17205371.2
(22) Date de dépôt: 05.12.2017
(51) Int. Cl.: B23Q 9/00

(54) **DISPOSITIF DE GUIDAGE ADAPTE POUR SE POSITIONNER SUR UNE SURFACE A DOUBLE RAYON DE COURBURE**
LENKVORRICHTUNG, DIE IN DER LAGE IST, SICH AUF EINER OBERFLÄCHE MIT DOPPELTEM KRÜMMUNGSRADIUS ZU POSITIONIEREN
GUIDE DEVICE SUITABLE FOR BEING POSITIONED ON A SURFACE WITH DOUBLE RADIUS OF CURVATURE

(30) Priorité: 22.12.2016 FR 1663119
(43) Date de publication de la demande: 27.06.2018
(73) Titulaire: Airbus Operations S.A.S., 31060 Toulouse (FR)
(72) Inventeur: ALBERT, Fabien, 44500 LA BAULE (FR); LE HENAFF, Perig, 44160 PONTCHATEAU (FR)
(74) Mandataire: Gicquel, Olivier Yves Gérard

(56) Documents cités:
- EP-A1- 2 384 842
- EP-A2- 2 082 839
- WO-A1-2007/019228

## Description

La présente demande se rapporte à un dispositif de guidage adapté pour se positionner sur une surface à double rayon de courbure.

Pour réaliser certaines opérations de perçage et de rivetage sur un fuselage d'aéronef, un dispositif de guidage est positionné de manière temporaire sur la surface extérieure du fuselage afin de guider un outil selon une direction de travail.

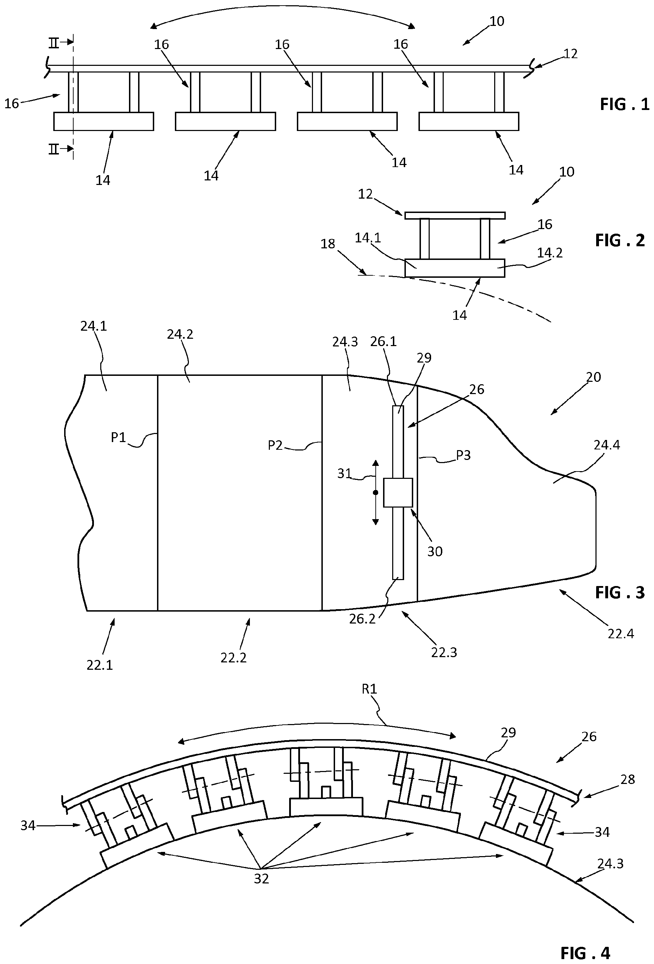

Selon un mode de réalisation de l'art antérieur visible sur les figures 1 et 2, un dispositif de guidage 10 comprend :
- un rail 12 configuré pour supporter un outil et qui se déforme pour s'étendre selon une première direction parallèle à la direction de travail de l'outil,
- une pluralité de ventouses 14 régulièrement réparties selon la première direction et qui sont chacune configurées pour se fixer de manière temporaire sur une surface,
- pour chaque ventouse 14, une liaison ventouse/rail rigide 16 entre la ventouse 14 et le rail 12.

Classiquement, un fuselage d'un aéronef comprend plusieurs tronçons mis bout à bout au niveau de plans transversaux et présentant chacun une surface extérieure. Lorsque l'opération réalisée se fait selon une direction de travail parallèle à un plan transversal de l'aéronef, le dispositif de guidage 10 suit alors le profil d'une surface présentant un rayon de courbure dans la première direction.

Cependant, certains tronçons de fuselage présentent des surfaces dites non-développables. Certaines de ces surfaces non-développables sont à double rayon de courbure et présentent notamment un premier rayon dans une direction parallèle à un plan transversal de l'aéronef et un deuxième rayon de courbure dans une deuxième direction perpendiculaire à un plan transversal de l'aéronef.

Lorsque le dispositif de guidage 10 est positionné sur un tronçon de fuselage présentant une surface non-développable, il épouse les formes de la surface et tend naturellement à s'écarter par rapport à la direction de travail que doit suivre l'outil. Ainsi, une première extrémité du dispositif de guidage 10 est disposée à proximité de la direction de travail alors que la seconde extrémité du dispositif de guidage 10 est écartée de la direction de travail. Pour certains tronçons du fuselage, l'écart entre la seconde extrémité du dispositif de guidage 10 et la direction de travail que doit suivre l'outil est trop important pour être compensé par les dimensions de l'outil. De plus, en raison de cet écart, le rail 12 peut présenter une torsion qui bloque le déplacement de l'outil le long du rail et le dispositif de guidage 10 peut interférer avec d'autres éléments positionnés autour du fuselage.

Dans un tel cas d'un tronçon du fuselage présentant une surface non-développable, le dispositif de guidage 10 ne peut pas être positionné parallèlement à un plan transversal car dans cette position toute la surface des ventouses n'est pas en contact avec la surface du fuselage 18.

Comme illustré sur la figure 2, seule une extrémité 14.1 de chaque ventouse est en contact avec la surface du fuselage 18, l'autre extrémité 14.2 étant écartée.

Le document EP2384842 décrit un rail pour guider un appareil de soudage. Ce rail est relié à une pluralité de supports chacun d'eux étant relié au rail par une liaison rotule. Selon ce document, l'axe de pivotement entre le rail et chaque support est positionné au niveau de la liaison rotule, entre le support et le rail, et il est écarté de la surface du support configurée pour être plaquée sur la surface de travail. Cette configuration ne permet pas de s'adapter à un changement de courbure de la surface de travail.

La présente invention vise à remédier aux inconvénients de l'art antérieur.

A cet effet, l'invention a pour objet un dispositif de guidage comprenant :
- un rail qui s'étend selon une direction et qui comprend une surface de support configurée pour porter et guider un outil selon une direction de travail parallèle à la direction,
- une pluralité de patins répartis selon la direction, chaque patin étant configuré pour occuper un état actif dans lequel le patin est immobilisé et un état repos dans lequel le patin peut bouger,
- pour chaque patin au moins une liaison patin/rail reliant chaque patin et le rail, caractérisé en ce que chaque liaison patin/rail est configurée pour permettre à chaque patin de pivoter indépendamment des autres patins par rapport au rail autour d'un axe de pivotement parallèle à la direction.

Ainsi, selon l'invention, le rail peut être positionné parallèlement à la direction de travail sur une surface extérieure d'un fuselage non-développable, chaque patin étant plaqué sur toute sa surface sur la surface extérieure du fuselage.

Selon une autre caractéristique, l'axe de pivotement est positionné sur une première face du patin configurée pour être plaquée sur une surface de travail sur laquelle est rapportée le dispositif de guidage en fonctionnement, à équidistance des bords latéraux du patin.

Selon une variante, chaque liaison patin/rail comprend une première partie solidaire du rail, une deuxième partie solidaire du patin, les première et deuxième parties ayant des formes qui coopèrent, configurées pour former une liaison glissière en arc de cercle avec un centre positionné sur l'axe de pivotement.

Ainsi, le centre de rotation de chaque patin est confondu avec le centre de la première face du patin et chaque patin reste immobile lorsque le patin est plaqué sur la surface de travail.

Selon une autre caractéristique, la deuxième partie comprend un corps relié au patin qui présente un trou oblong comportant un chant supérieur et un chant inférieur coaxiaux et la première partie comprend une traverse reliée au rail et une tête solidaire de la traverse, ladite tête comportant une face supérieure configurée pour être plaquée et glissée sur le chant supérieur du trou oblong et une face inférieure configurée pour être plaquée et glissée sur le chant inférieur du trou oblong.

Selon un mode de réalisation :
- la tête est reliée à la traverse par un support et décalée vers l'axe de pivotement par rapport à la traverse,
- la traverse comprend, sur une première face orientée vers la tête, au moins une découpe cylindrique coaxiale à la face supérieure de la tête,
- le corps comprend une face supérieure orientée vers la traverse coaxiale au chant du trou oblong, et l'écartement entre la face supérieure et le chant supérieur du trou oblong est égal à l'écartement entre la face supérieure de la tête et la découpe de la traverse.

Selon une autre caractéristique, chaque patin est relié au rail par deux liaisons patin/rail, décalées selon la direction, les supports reliant les têtes aux traverses étant positionnés entre les corps des deux liaisons patin/rail.

D'autres caractéristiques et avantages ressortiront de la description de l'invention qui va suivre, description donnée à titre d'exemple uniquement, en regard des dessins annexés sur lesquels :
- La figure 1 est une vue latérale d'un dispositif de guidage qui illustre un mode de réalisation de l'invention,
- La figure 2 est une coupe selon la ligne II-II du dispositif de guidage visible sur la figure 1,
- La figure 3 est une représentation schématique d'un dispositif de guidage positionné sur une surface de travail qui illustre un mode de réalisation de l'invention,
- La figure 4 est une coupe schématique du dispositif de guidage visible sur la figure 3,
- La figure 5 est une vue en perspective d'un dispositif de guidage qui illustre une variante de l'invention,
- La figure 6 est une vue de face du dispositif de guidage visible sur la figure 5,
- La figure 7 est une vue en perspective d'un patin et d'une liaison patin/rail du dispositif de guidage visible sur la figure 5,
- La figure 8 est une vue en perspective d'une première partie de la liaison patin/rail visible sur la figure 7, et
- La figure 9 est une vue en perspective d'une deuxième partie de la liaison patin/rail visible sur la figure 7.

La figure 3 illustre un fuselage 20 d'un aéronef qui comprend plusieurs tronçons 22.1 à 22.4 mis bout à bout au niveau de plans transversaux P1, P2, P3 et présentant chacun une surface extérieure 24.1 à 24.4. Pour certains tronçons 22.1 et 22.2, la surface extérieure 24.1, 24.4 est sensiblement cylindrique et comprend un rayon de courbure. Pour d'autres tronçons 22.3 et 22.4, la surface extérieure 24.3 et 24.4 est non-développable et présente plusieurs rayons de courbure, notamment deux rayons de courbure dans le cas du tronçon 22.3.

Un dispositif de guidage 26 est positionné sur la surface extérieure 24.3 dite surface de travail, à proximité du plan transversal P3, parallèlement au plan transversal P3.

Ce dispositif de guidage 26 s'étend selon une direction D entre une première extrémité 26.1 et une seconde extrémité 26.2 et comprend :
- un rail 28 qui s'étend de la première extrémité 26.1 jusqu'à la seconde extrémité 26.2 et qui comprend une surface de support 29 configurée pour porter et guider un outil 30 selon une direction de travail 31 parallèle à la direction D,
- une pluralité de patins 32 répartis selon la direction D, chaque patin 32 étant configuré pour occuper un état actif dans lequel il est immobilisé par rapport à la surface de travail 24.3 et un état repos dans lequel il peut bouger par rapport à la surface de travail 24.3,
- pour chaque patin 32, au moins une liaison patin/rail 34 configurée pour relier chaque patin 32 au rail 28.

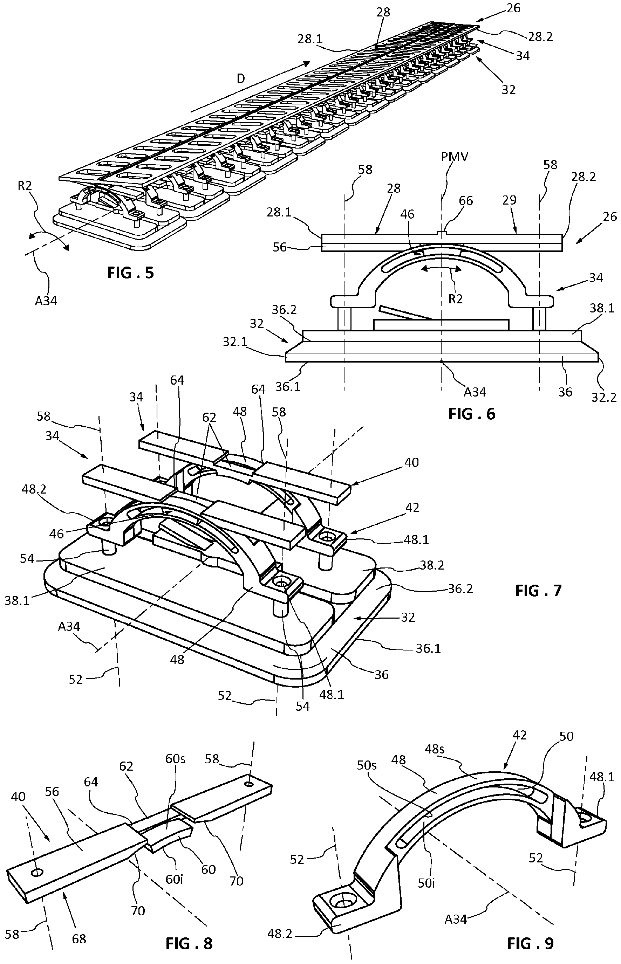

Le rail 28 est configuré pour occuper un état conformé dans lequel la surface de support 29 du rail 28 est parallèle à la surface de travail 24.3. Ainsi, le rail 28 peut se déformer selon un premier rayon de courbure R1 visible sur la figure 4 et selon un deuxième rayon de courbure R2, dans un plan perpendiculaire à la direction D, visible sur la figure 5. Le rail n'est pas plus décrit car il peut être identique aux rails de l'art antérieur.

Le rail 28 comprend un plan médian vertical PMV qui est parallèle à la direction D, équidistant des bords 28.1 et 28.2 du rail 28 et perpendiculaire à la surface support 29 du rail 28.

Le patin 32 comprend des bords latéraux 32.1 et 32.2 parallèles à la direction D et positionnés également à équidistance du plan médian vertical PMV.

Selon un mode de réalisation visible sur les figures 6 et 7, chaque patin 32 comprend une semelle 36 configurée pour se déformer selon les premier et deuxième rayons de courbure R1 et R2 qui comprend une première face 36.1 configurée pour être plaquée sur la surface de travail 24.3 et une deuxième face 36.2 opposée à la première face 36.1 et orientée vers le rail 28, ainsi que deux blocs rigides 38.1 et 38.2 positionnées sur la deuxième face 36.2 et solidaires de la semelle 36. Les deux blocs rigides 38.1 et 38.2 sont décalés selon la direction D pour permettre à la semelle 36 de se déformer selon le premier rayon de courbure R1.

Selon un mode de fonctionnement, chaque patin 32 est de type à ventouse.

L'invention n'est pas limitée à ce mode de réalisation pour les patins 32. Ainsi, les patins peuvent être de type électromagnétique, l'immobilisation du patin par rapport à la surface de travail 24.3 n'étant pas générée par dépression mais par aimantation. D'autres solutions techniques sont envisageables pour immobiliser les patins 32 de manière temporaire par rapport à la surface de travail 24.3.

Avantageusement, le dispositif de guidage comprend au moins une commande pour contrôler l'état des patins 32.

Selon une caractéristique de l'invention, chaque liaison patin/rail 34 est configurée pour permettre à chaque patin 32 de pivoter indépendamment des autres patins 32 par rapport au rail 28 autour d'un axe de pivotement A34 parallèle à la direction D et positionné dans le plan médian vertical PMV.

Selon cet agencement, le rail 28 peut être positionné parallèlement à un plan transversal sur une surface de travail avec un double rayon de courbure, chaque patin 32 étant plaqué sur toute la première face 36.1 contre la surface de travail 24.3. Ainsi, la direction D du rail 28 est parallèle à la direction de travail 31 que doit suivre l'outil 30.

Chaque liaison patin/rail 34 comprend une première partie 40 solidaire du rail 28 et une deuxième partie 42 solidaire du patin 32.

Selon une première variante, la première partie 40 est reliée à la deuxième partie 42 par un axe de rotation 44 qui forme l'axe de pivotement A34.

Selon une deuxième variante visible sur les figures 5 à 9, les première et deuxième parties 40, 42 ont des formes qui coopèrent, configurées pour former une liaison glissière 46 en arc de cercle avec un centre positionné sur l'axe de pivotement A34.

Selon une caractéristique de l'invention, l'axe de pivotement A34 est positionné sur la première face 36.1, à équidistance des bords latéraux 32.1 et 32.2 du patin 32. En fonctionnement, l'axe de pivotement A34 est positionné à une interface entre le patin 32 et la surface de travail 24.3. Ce positionnement combiné au fait que l'axe de pivotement A34 est à équidistance des bords latéraux 32.1 et 32.2 de chaque patin 32 permet de conformer les patins 32 sur la surface de travail 24.3 sans générer de déplacement du centre de chaque patin 32.

Selon un mode de réalisation de cette deuxième variante, la deuxième partie 42 comprend un corps 48 en arc de cercle qui présente un trou oblong 50 en arc de cercle avec un centre de courbure positionné sur l'axe de pivotement A34. Le trou oblong 50 présente un chant supérieur 50S et un chant inférieur 50I coaxiaux ayant le même axe confondu avec l'axe de pivotement A34.

Le rayon de la forme en arc de cercle du trou oblong 50 est déterminé de manière à ce que l'axe de pivotement A34 soit positionné sur la première face 36.1, à équidistance des bords latéraux 32.1 et 32.2 du patin 32.

Le corps 48 comprend deux extrémités 48.1 et 48.2 reliées au patin 32 par tous moyens de fixation 52 appropriés, comme des vis ou des boulons par exemple, et maintenues écartées du patin grâce à deux entretoises 54, une à chaque extrémité 48.1, 48.2.

En complément, la première partie 40 comprend une traverse 56 reliée au rail 28 par tous moyens de fixation 58 appropriés, comme des vis ou des boulons par exemple, et une tête 60 solidaire de la traverse 56, ladite tête 60 comportant des formes adaptées pour coulisser dans le trou oblong 50 de la deuxième partie 42.

Ainsi, la tête 60 comprend une face supérieure 60S configurée pour être plaquée et glissée sur le chant supérieur 50S du trou oblong 50 ainsi qu'une face inférieure 60I configurée pour être plaquée et glissée sur le chant inférieur 50I du trou oblong 50. La tête 60 a une longueur inférieure à celle du trou oblong 50 pour lui permettre de coulisser dans le trou oblong 50. Selon un mode de réalisation, la tête 60 est décalée par rapport à la traverse 56 vers l'axe de pivotement A34, selon une direction radiale (perpendiculaire à l'axe de pivotement A34). Dans ce cas, la tête 60 est reliée à la traverse 56 par un support 62. Avantageusement, la traverse 56, la tête 60 et le support 62 sont une seule et même pièce.

Selon un mode de réalisation, la traverse 56 comprend un décrochement 64 au niveau du support 62 pour loger un système de guidage 66, comme une crémaillère par exemple, prévu au niveau du rail 28.

La traverse 56 comprend, sur une première face 68 orientée vers la tête 60, au moins une découpe 70 cylindrique coaxiale à la face supérieure 60S de la tête 60. En complément, le corps 48 comprend une face supérieure 48S orientée vers la traverse 56 coaxiale au chant 50S du trou oblong 50. L'écartement entre la face supérieure 48S et le chant supérieur 50S du trou oblong 50 est égal à l'écartement entre la face supérieure 60S de la tête 60 et la découpe 70 de la traverse 56. Ainsi, en fonctionnement, trois surfaces 60I, 60S, 70 de la première partie 40 coulissent respectivement sur trois surfaces 50I, 50S, 48S de la deuxième partie 42 ce qui confère un guidage optimal entre la première partie 40 et la deuxième partie 42.

Selon un mode de réalisation, chaque patin 32 est relié au rail 28 par deux liaisons patin/rail 34, décalées selon la direction D, une pour chaque bloc rigide 38. Pour chaque patin 32, les supports 62 reliant les têtes 60 aux traverses 56 sont positionnés entre les corps 48 pour éviter que les têtes 60 sortent des trous oblongs 50.

Selon l'invention, le rail 28 peut être positionné dans une direction de travail 31 maîtrisée. Par ailleurs, grâce à l'invention, un espace technique est agencé entre le rail 28 et les patins 32 pour l'intégration de fonctions supplémentaires nécessaire aux systèmes de gestion du vide, d'apport électrique ou autre.

## Revendications

1. Dispositif de guidage comprenant :
- un rail (28) qui s'étend selon une direction (D) et qui comprend une surface de support (29) configurée pour porter et guider un outil (30) selon une direction de travail (31) parallèle à la direction (D),
- une pluralité de patins (32) répartis selon la direction (D), chaque patin (32) étant configuré pour occuper un état actif dans lequel le patin (32) est immobilisé et un état repos dans lequel le patin (32) peut bouger,
- pour chaque patin (32) au moins une liaison patin/rail (34) reliant chaque patin (32) et le rail (28),
chaque liaison patin/rail (34) étant configurée pour permettre à chaque patin (32) de pivoter indépendamment des autres patins (32) par rapport au rail (28) autour d'un axe de pivotement (A34) parallèle à la direction (D), **caractérisé en ce que** l'axe de pivotement (A34) est positionné sur une première face (36.1) du patin (32) configurée pour être plaquée sur une surface de travail (24.3) sur laquelle est rapportée le dispositif de guidage en fonctionnement.

2. Dispositif de guidage selon la revendication 1, **caractérisé en ce que** l'axe de pivotement (A34) est positionné à équidistance des bords latéraux (32.1, 32.2) du patin (32).

3. Dispositif de guidage selon la revendication précédente, **caractérisé en ce que** chaque liaison patin/rail (34) comprend une première partie (40) solidaire du rail (28), une deuxième partie (42) solidaire du patin (32), les première et deuxième parties (40, 42) ayant des formes qui coopèrent, configurées pour former une liaison glissière (46) en arc de cercle avec un centre positionné sur l'axe de pivotement (A34).

4. Dispositif de guidage selon la revendication précédente, **caractérisé en ce que** la deuxième partie (42) comprend un corps (48) relié au patin (32) qui présente un trou oblong (50) comportant un chant supérieur (50S) et un chant inférieur (50I) coaxiaux et **en ce que** la première partie (40) comprend une traverse (56) reliée au rail (28) et une tête (60) solidaire de la traverse (56), ladite tête (60) comportant une face supérieure (60S) configurée pour être plaquée et glissée sur le chant supérieur (50S) du trou oblong (50) ainsi qu'une face inférieure (60I) configurée pour être plaquée et glissée sur le chant inférieur (50I) du trou oblong (50).

5. Dispositif de guidage selon la revendication précédente, **caractérisé en ce que** la tête (60) est reliée à la traverse (56) par un support (62) et décalée vers l'axe de pivotement (A34) par rapport à la traverse (56), **en ce que** la traverse (56) comprend, sur une première face (68) orientée vers la tête (60), au moins une découpe (70) cylindrique coaxiale à la face supérieure (60S) de la tête (60), **en ce que** le corps (48) comprend une face supérieure (48S) orientée vers la traverse (56) coaxiale au chant (50S) du trou oblong (50) et **en ce que** l'écartement entre la face supérieure (48S) et le chant supérieur (50S) du trou oblong (50) est égal à l'écartement entre la face supérieure (60S) de la tête (60) et la découpe (70) de la traverse (56).

6. Dispositif de guidage selon la revendication précédente, **caractérisé en ce que** chaque patin (32) est relié au rail (28) par deux liaisons patin/rail (34), décalées selon la direction (D), les supports (62) reliant les têtes (60) aux traverses (56) étant positionnés entre les corps (48) des deux liaisons patin/rail (34).

## Patentansprüche

1. Führungsvorrichtung, welche umfasst:
- eine Schiene (28), welche sich in einer Richtung (D) erstreckt und welche eine Stützfläche (29) umfasst, die dafür ausgelegt ist, ein Werkzeug (30) in einer zur Richtung (D) parallelen Arbeitsrichtung (31) zu tragen und zu führen,
- mehrere Fußplatten (32), die entlang der Richtung (D) verteilt sind, wobei jede Fußplatte (32) dafür ausgelegt ist, einen aktiven Zustand, in welchem die Fußplatte (32) fixiert ist, und einen Ruhezustand, in welchem sich die Fußplatte (32) bewegen kann, einzunehmen,
- für jede Fußplatte (32) wenigstens eine Verbindung Fußplatte/Schiene (34), welche die jeweilige Fußplatte (32) und die Schiene (28) verbindet,
wobei jede Verbindung Fußplatte/Schiene (34) dafür ausgelegt ist, der jeweiligen Fußplatte (32) zu ermöglichen, unabhängig von den anderen Fußplatten (32) in Bezug auf die Schiene (28) um eine zur Richtung (D) parallele Schwenkachse (A34) zu schwenken, **dadurch gekennzeichnet, dass** die Schwenkachse (A34) auf einer ersten Seite (36.1) der Fußplatte (32) positioniert ist, die dafür ausgelegt ist, an eine Arbeitsfläche (24.3) angedrückt zu werden, auf welche die Führungsvorrichtung im Betrieb aufgesetzt ist.

2. Führungsvorrichtung nach Anspruch 1, **dadurch gekennzeichnet, dass** die Schwenkachse (A34) äquidistant zu den seitlichen Rändern (32.1, 32.2) der Fußplatte (32) positioniert ist.

3. Führungsvorrichtung nach dem vorhergehenden Anspruch, **dadurch gekennzeichnet, dass** jede Verbindung Fußplatte/Schiene (34) einen ersten Teil (40), der mit der Schiene (28) fest verbunden ist, und einen zweiten Teil (42), der mit der Fußplatte (32) fest verbunden ist, umfasst, wobei der erste und der zweite Teil (40, 42) Formen aufweisen, welche zusammenwirken und so gestaltet sind, dass sie eine Gleitverbindung (46) in Kreisbogenform mit einem auf der Schwenkachse (A34) positionierten Mittelpunkt bilden.

4. Führungsvorrichtung nach dem vorhergehenden Anspruch, **dadurch gekennzeichnet, dass** der zweite Teil (42) einen mit der Fußplatte (32) verbundenen Körper (48) umfasst, welcher ein Langloch (50) aufweist, das einen oberen Rand (50S) und einen unteren Rand (50I), die koaxial sind, aufweist, und dadurch, dass der erste Teil (40) eine mit der Schiene (28) verbundene Querstrebe (56) und ein mit der Querstrebe (56) fest verbundenes Kopfstück (60) umfasst, wobei das Kopfstück (60) eine Oberseite (60S), die dafür ausgelegt ist, an den oberen Rand (50S) des Langlochs (50) angedrückt und auf ihm verschoben zu werden, sowie eine Unterseite (60I), die dafür ausgelegt ist, an den unteren Rand (50I) des Langlochs (50) angedrückt und auf ihm verschoben zu werden, aufweist.

5. Führungsvorrichtung nach dem vorhergehenden Anspruch, **dadurch gekennzeichnet, dass** das Kopfstück (60) mit der Querstrebe (56) durch einen Halter (62) verbunden ist und in Bezug auf die Querstrebe (56) zur Schwenkachse (A34) hin versetzt ist, dadurch, dass die Querstrebe (56) auf einer dem Kopfstück (60) zugewandten ersten Seite (68) wenigstens einen zylindrischen Ausschnitt (70), der mit der Oberseite (60S) des Kopfstücks (60) koaxial ist, umfasst, dadurch, dass der Körper (48) eine der Querstrebe (56) zugewandte Oberseite (48S) umfasst, die mit dem Rand (50S) des Langlochs (50) koaxial ist, und dadurch, dass der Abstand zwischen der Oberseite (48S) und dem oberen Rand (50S) des Langlochs (50) gleich dem Abstand zwischen der Oberseite (60S) des Kopfstücks (60) und dem Ausschnitt (70) der Querstrebe (56) ist.

6. Führungsvorrichtung nach dem vorhergehenden Anspruch, **dadurch gekennzeichnet, dass** jede Fußplatte (32) mit der Schiene (28) durch zwei Verbindungen Fußplatte/Schiene (34) verbunden ist, die in der Richtung (D) versetzt sind, wobei die Halter (62), welche die Kopfstücke (60) mit den Querstreben (56) verbinden, zwischen den Körpern (48) der zwei Verbindungen Fußplatte/Schiene (34) positioniert sind.

## Claims

1. Guiding device comprising:
- a rail (28) which extends in a direction (D), and comprises a support surface (29) which is configured to support and guide a tool (30) in a direction of work (31) parallel to the direction (D);
- a plurality of runners (32) distributed in the direction (D), each runner (32) being configured to occupy an active state in which the runner (32) is immobilized, and a state of rest in which the runner (32) can move;
- for each runner (32), at least one runner/rail connection (34) connecting each runner (32) and the rail (28),
each runner/rail connection (34) being configured to allow each runner (32) to pivot independently from the other runners (32) relative to the rail (28), around an axis of pivoting (A34) parallel to the direction (D), **characterized in that** the axis of pivoting (A34) is positioned on a first face (36.1) of the runner (32) configured to be placed on a work surface (24.3) on which the guiding device is added in operation.

2. Guiding device according to Claim 1, **characterized in that** the axis of pivoting (A34) is positioned equidistantly from the lateral edges (32.1, 32,2) of the runner (32).

3. Guiding device according to the preceding claim, **characterized in that** each runner/rail connection (34) comprises a first part (40) which is integral with the rail (28), and a second part (42) which is integral with the runner (32), the first and second parts (40, 42) having forms which cooperate, configured to form a slide connection (46) in the form of an arc of a circle with a centre positioned on the axis of pivoting (A34).

4. Guiding device according to the preceding claim, **characterized in that** the second part (42) comprises a body (48) connected to the runner (32) which has an oblong hole (50) comprising an upper rim (50S) and a lower rim (50I) which are coaxial, and **in that** the first part (40) comprises a cross-member (56) which is connected to the rail (28), and a head (60) which is integral with the cross-member (56), the said head (60) comprising an upper face (60S) which is configured to be placed and slid on the upper rim (50S) of the oblong hole (50), as well as a lower face (601) which is configured to be placed and slid on the lower rim (50I) of the oblong hole (50).

5. Guiding device according to the preceding claim, **characterized in that** the head (60) is connected to the cross-member (56) by a support (62), and is offset towards the axis of pivoting (A34) relative to the cross-member (56), **in that**, on a first face (68) which is oriented towards the head (60), the cross-member (56) comprises at least one cylindrical cut-out (70) coaxial with the upper face (60S) of the head (60), **in that** the body (48) comprises an upper face (48S) oriented towards the cross-member (56) coaxial with the rim (50S) of the oblong hole (50), and **in that** the distance between the upper face (48S) and the upper rim (50S) of the oblong hole (50) is equal to the distance between the upper face (60S) of the head (60) and the cut-out (70) in the cross-member (56).

6. Guiding device according to the preceding claim, **characterized in that** each runner (32) is connected to the rail (28) by two runner/rail connections (34) offset in the direction (D), the supports (62) which connect the heads (60) to the cross-members (56) being positioned between the bodies (48) of the two runner/rail connections (34).
